Europäisches Patentamt

European Patent Office

Office européen des brevets

(19)

(11) **EP 0 764 347 B1**

(12) **FASCICULE DE BREVET EUROPEEN**

(45) Date de publication et mention
de la délivrance du brevet:
**10.02.1999  Bulletin 1999/06**

(21) Numéro de dépôt: **95921863.7**

(22) Date de dépôt: **31.05.1995**

(51) Int Cl.⁶: **H01L 41/04**, H02N 2/14

(86) Numéro de dépôt international:
**PCT/FR95/00704**

(87) Numéro de publication internationale:
**WO 95/34097 (14.12.1995 Gazette 1995/53)**

(54) **CIRCUIT D'ALIMENTATION D'UN MOTEUR PIEZO-ELECTRIQUE**

SCHALTUNGSANORDNUNG FÜR EINEN PIEZOELEKTRISCHEN MOTOR

POWER SUPPLY CIRCUIT FOR A PIEZOELECTRIC MOTOR

(84) Etats contractants désignés:
**CH DE GB IT LI NL SE**

(30) Priorité: **08.06.1994  FR 9407028**

(43) Date de publication de la demande:
**26.03.1997  Bulletin 1997/13**

(73) Titulaire: **MOULINEX S.A.**
**75008 Paris (FR)**

(72) Inventeurs:
• **NOGAREDE, Bertrand**
**F-31000 Toulouse (FR)**

• **PIECOURT, Eric**
**F-46170 Castelnau-Montratier (FR)**

(74) Mandataire: **Busquets, Jean-Pierre**
**Groupe Moulinex C.E.R.,**
**Direction de la Propriété Industrielle,**
**8 Rue du Colonel Rémy**
**14052 Caen Cédex (FR)**

(56) Documents cités:
**US-A- 5 021 700        US-A- 5 130 619**
**US-A- 5 179 311**

# Description

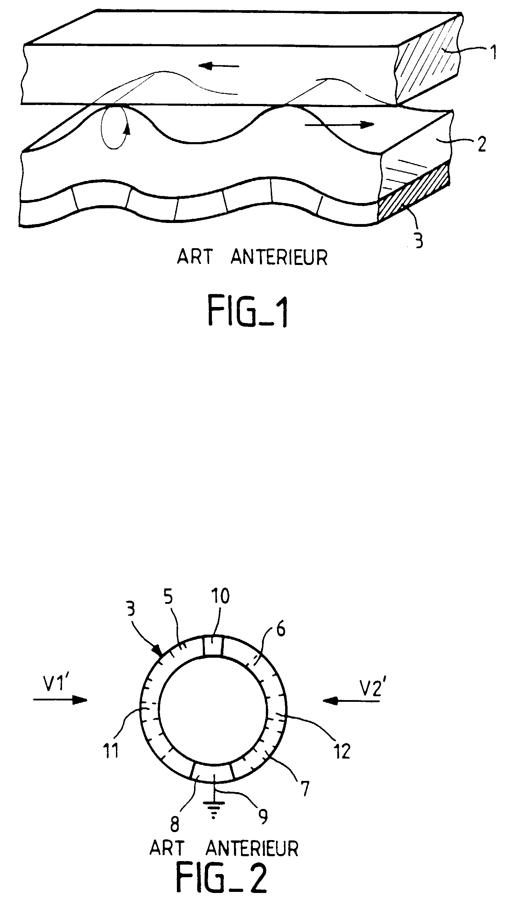

L'invention concerne un circuit d'alimentation d'un moteur piézo-électrique, par exemple, du type à onde progressive représenté schématiquement sur la figure 1 et comprenant un rotor 1, entraîné par frottement par un stator 2 excité par un élément piézo-électrique 3.

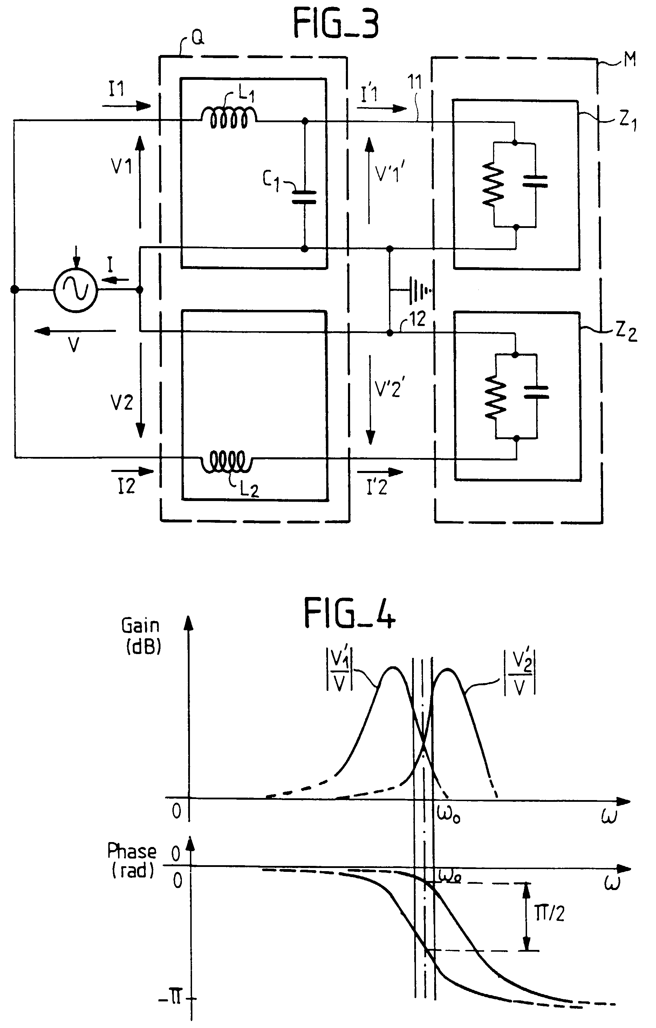

Selon un mode de réalisation particulier connu, représenté à la figure 2, l'élément piézo-électrique 3 comporte deux secteurs piézo-électrique 5 et 6 disposés en série et alternativement polarisés. Ces deux secteurs 5 et 6 sont séparées par deux espaces ne recevant aucun secteur piézo-électrique actif : un premier espace 8 servant habituellement de capteur dans la boucle de contrôle de la vibration et un deuxième espace neutre 10. La face arrière de l'élément piézo-électrique non représentée est connectée à la masse 9. Le secteur 5 est excité par une première électrode 11 alimentée par une tension haute fréquence $V_1'$ et le secteur 6 est excité par une deuxième électrode 12 alimentée par une tension haute fréquence $V_2'$, lesdites tensions $V_1'$ et $V_2'$ étant déphasées de sensiblement 90° et délivrées par deux sources d'alimentation alternatives créées indépendamment à partir d'une source de tension continue. Les tensions $V_1'$ et $V_2'$ appliquées à chacune des électrodes provoquent des vibrations de chacun des secteurs 5 et 6 créant deux ondes stationnaires dont la résultante conduit à une onde progressive permettant d'obtenir des mouvements elliptiques des points matériels de l'élément élastique du stator mis en contact avec le rotor ce qui engendre le mouvement de rotation du rotor par rapport au stator.

Les sources d'alimentation alternatives sont donc créées par des dispositifs d'alimentation indépendants. De tels dispositifs d'alimentation utilisent soit deux circuits magnétiques indépendants comme cela est décrit dans les brevets US-5 130 619 et US-5 021 700, soit plusieurs interrupteurs indépendants comme cela est décrit dans le brevet US-5 179 311. Ces dispositifs d'alimentation possèdent donc un nombre important de composants ce qui augmente considérablement le prix de revient desdits dispositifs ainsi que leur encombrement.

Le but de l'invention est de remédier aux inconvénients précités en mettant en oeuvre un nouveau circuit d'alimentation fiable et économique.

Selon l'invention, le circuit d'alimentation d'un moteur piézo-électrique comporte une source unique d'alimentation alternative haute fréquence, ainsi qu'un moyen d'adaptation connecté, d'une part, à la source d'alimentation alternative et, d'autre part, aux deux électrodes excitant l'élément piézo-électrique et destiné à générer les deux tensions $V_1'$ et $V_2'$ et comportant deux quadripôles reliés respectivement aux électrodes (11 et 12) et comprenant des éléments passifs tels que des inductances et capacités.

Grâce à l'invention, le circuit d'alimentation du moteur piézo-électrique n'est pas surdimensionné et la nouvelle structure du circuit d'alimentation simplifie considérablement l'alimentation des électrodes excitant l'élément piézo-électrique du moteur en minimisant les coûts et ce en limitant le nombre de composants utilisés.

Les caractéristiques et avantages de l'invention ressortiront d'ailleurs de la description qui va suivre, prise à titre d'exemple non limitatif, en référence aux dessins annexés dans lesquels :

- la figure 1 représente une vue en coupe d'une représentation schématique d'un moteur piézoélectrique selon l'art antérieur ;
- la figure 2 représente l'agencement des électrodes excitant l'élément piézo-électrique du moteur de la figure 1 selon un mode de réalisation de type connu ;
- la figure 3 représente un schéma électrique d'un premier mode de réalisation d'un circuit d'alimentation d'un moteur piézo-électrique selon l'invention ;
- la figure 4 représente un diagramme fréquentiel associé au circuit d'alimentation selon l'invention ;
- la figure 5 représente un schéma électrique d'un mode particulier du circuit d'alimentation selon l'invention ;
- la figure 6 représente un transformateur bien adapté au circuit d'alimentation de la figure 3 selon l'invention ;
- la figure 7 représente les formes d'ondes obtenues avec le circuit d'alimentation représenté à la figure 3 ;
- la figure 8 représente un autre mode de réalisation d'un circuit d'alimentation semblable à celui de la figure 5 et équipé d'un dispositif de régulation de la vitesse de rotation du moteur piézo-électrique ;
- la figure 9 représente un mode particulier de réalisation du circuit d'alimentation semblable à la figure 8 et équipé d'un autre dispositif de régulation de la vitesse de rotation du moteur piézo-électrique.

Comme représenté à la figure 3, le circuit d'alimentation comporte une source unique d'alimentation alternative haute fréquence V ainsi qu'un moyen d'adaptation Q connecté, d'une part, à la source d'alimentation alternative V et, d'autre part, aux deux électrodes 11 et 12 excitant l'élément piézo-électrique 3 et destiné à générer les deux tensions $V_1'$ et $V_2'$.

Les deux phases d'un moteur piézo-électrique à onde progressive peuvent être considérées comme identiques du point de vue de leur modélisation électrique. Elles peuvent être représentées, en première approximation, par une impédance parallèle R-C pour une tension, une fréquence et un couple délivré fixés.

Dans un tel cas, les différentes relations électriques sont définies par :

$$V = V_1 = V_2$$

$$I = I_1 + I_2$$

$$V_{1'} = Z_1 \, I_{1'}$$

$$V_{2'} = Z_2 \, I_{2'}$$

Le circuit d'alimentation selon l'invention permet de résoudre le problème donné par la relation électrique donnée par :

$$V_{2'} = A_{ej}\Theta \, V_{1'}, \quad (A = 1, \Theta = \pm 90°).$$

La connaissance des impédances $Z_1$ et $Z_2$ des phases 1 et 2 du moteur piézo-électrique M est indispensable pour déterminer les éléments constituant le moyen d'adaptation Q pour une fréquence donnée. Le moyen d'adaptation Q peut par exemple comprendre deux quadripôles comportant des éléments passifs tels que pour l'un une self $L_1$ et un condensateur $C_1$ et pour l'autre une seule self $L_2$. Comme on le comprendra, l'agencement, le nombre et le choix des éléments passifs constituant ledit moyen d'adaptation Q sont à définir par le concepteur de l'alimentation.

Une solution relativement simple pour satisfaire les contraintes définissant le problème par la relation électrique précédente consiste à utiliser le moyen d'adaptation Q dans laquelle la relation électrique est :

$$V'_2 = - jV'_1.$$

Les valeurs des éléments passifs du moyen d'adaptation sont parfaitement définis par la connaissance des impédances des phases 1 et 2 du moteurs et de la pulsation nominale de fonctionnement $W_0$.

En fait, comme illustré à la figure 4, le principe de fonctionnement du circuit d'alimentation revient à décaler, à l'aide du moyen d'adaptation Q, c'est-à-dire à l'aide des deux quadripôles les fréquences de résonance électrique au niveau des phases 1 et 2 du moteur. Ce décalage s'effectuant de part et d'autre de la bande de fréquence utilisée située au voisinage de la pulsation nominale $W_0$, un dimensionnement adéquat des éléments passifs permet, à partir de la source de tension alternative $\underline{V}$ commune, de générer les deux tensions $V_{1'}$ et $V_{2'}$ en quadrature de phase et ayant la même amplitude.

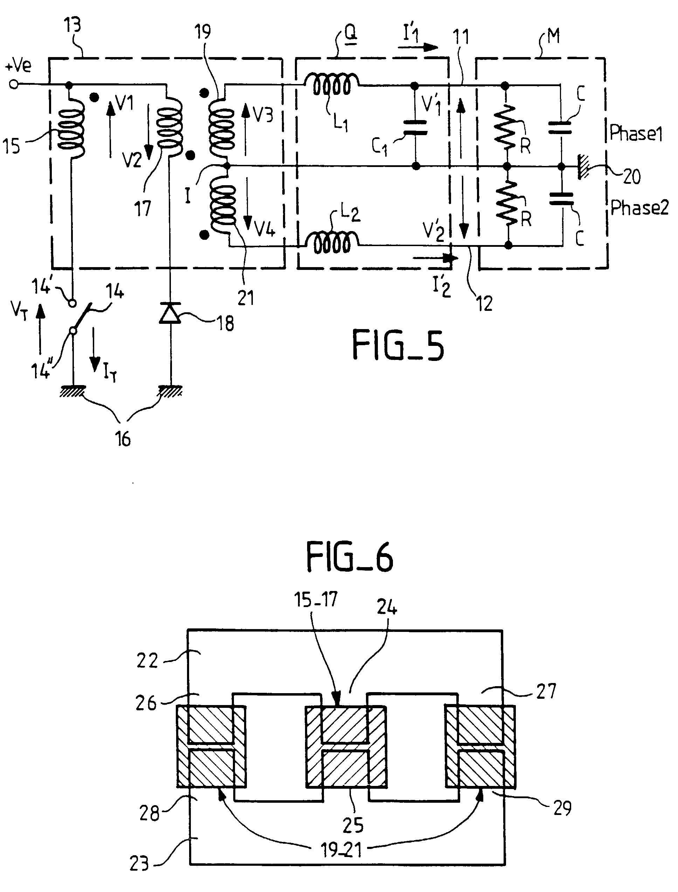

Selon un mode de réalisation préféré illustré à la figure 5, la source de tension alternative V est réalisé suivant une structure de type FORWARD et comprend un transformateur 13 dont l'étage primaire est, d'une part, connecté à une source de tension continue $V_E$ et, d'autre part, associé à un interrupteur électronique 14 et l'étage secondaire est connecté à un moyen d'adaptation Q. L'interrupteur 14 est par exemple un transistor de puissance de type connu. Les deux phases du moteur piézo-électrique à onde progressive ont été considérées comme identiques du point de vue de leur modélisation électrique et représentées par une impédance R-C parallèle pour une tension, une fréquence et un couple délivré fixés.

L'étage primaire du transformateur 13 comprend un premier enroulement 15 dont la borne pointée est connectée à la source de tension continue $+V_E$ et la borne non pointée est connectée à un plot 14' de l'interrupteur 14 dont l'autre plot 14" est connecté à la masse 16, ainsi qu'un deuxième enroulement 17 dont la borne non pointée est connectée à la source de tension continue $+V_E$ et la borne pointée est connectée à la cathode d'une diode de démagnétisation 18 dont l'anode est connectée à la masse 16.

L'étage secondaire du transformateur 13 comprend un premier enroulement 19 dont la borne pointée est connectée à l'extrémité d'une première inductance $L_1$ dont l'autre extrémité est connectée, d'une part, à une extrémité d'un condensateur $C_1$ dont l'autre extrémité est connectée à une masse 20 et, d'autre part, à l'électrode 11 excitant l'élément piézoélectrique 3, ainsi qu'un deuxième enroulement 21 dont la borne non pointée est connectée à la borne non pointée du premier enroulement 19, correspondant au point milieu I de l'étage secondaire et la borne pointée est connectée à l'extrémité d'une deuxième inductance $L_2$ dont l'autre extrémité est connectée à l'autre électrode 12 excitant l'élément piézo-électrique 3.

Le moyen d'adaptation Q comprend, d'une part, la première inductance $L_1$ et le condensateur $C_1$ constituant, avec l'élément piézo-électrique 3, un premier circuit résonnant et, d'autre part, la deuxième inductance $L_2$ constituant, avec l'élément piézo-électrique 3 un deuxième circuit résonnant.

Le circuit d'alimentation fonctionne de la manière suivante :

- lorsque l'interrupteur 14 est passant, la diode 18 est bloquée et les tensions aux bornes des différents enroulements sont :

$$V_1 = V_2 = E$$

$$V_3 = V_4 = kE \text{ (k : rapport de transformation).}$$

Lorsque l'interrupteur 14 est bloqué, la diode 18 est passante et les tensions deviennent :

$$V_1 = V_2 = - E$$

$$V_3 = V_4 = - kE$$

Ainsi pour assurer une valeur moyenne nulle de la tension aux bornes des différents enroulements du transformateur 13, l'interrupteur 14 doit fonctionner avec un rapport cyclique inférieur ou égal à 1/2, la valeur 1/2 permettant d'obtenir des formes d'ondes optimales au niveau des phases du moteur.

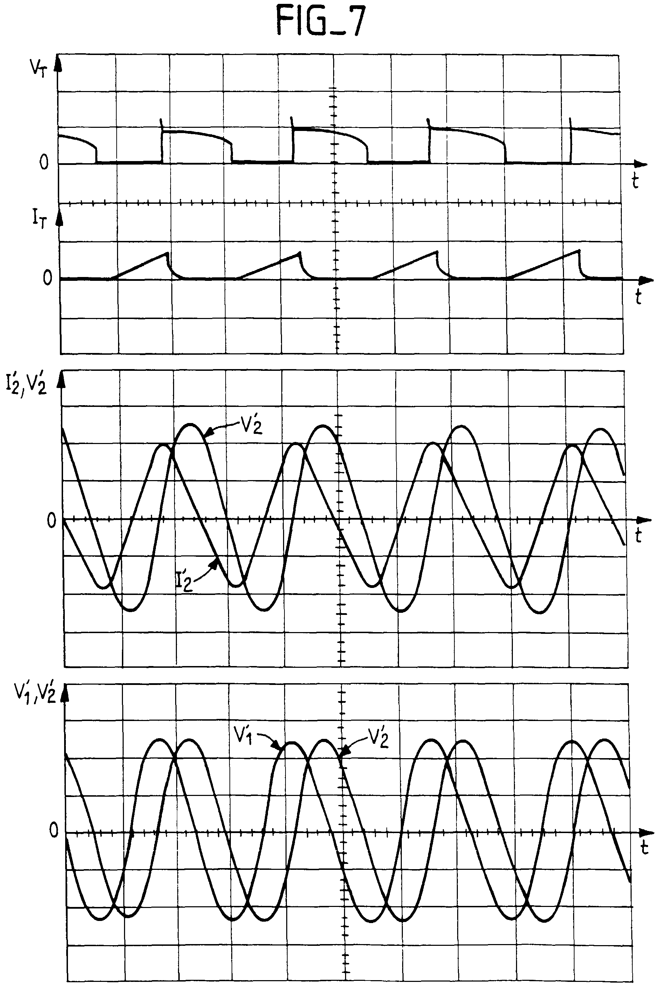

Selon une caractéristique intéressante de l'invention, les deux inductances $L_1$ et $L_2$ du moyen d'adaptation Q peuvent être constituées par les propres inductances de fuite du transformateur 13. Cette configuration nécessite un dimensionnement par calcul des champs du transformateur visant à maîtriser les fuites issues de l'étage secondaire du transformateur 13. Ainsi cette nouvelle structure simplifie le circuit d'alimentation représenté à la figure 5. Un tel transformateur est représenté à la figure 6 et comporte un circuit magnétique se composant de deux demi-circuits 22 et 23 en ferrite en forme de E et comprenant chacun une jambe centrale 24 ou 25 et deux jambes extérieures 26-27 ou 28-29 ; les enroulements de l'étage primaire sont enroulés autour des jambes centrales 24 et 25 et les enroulements des étages secondaires sont enroulés autour des jambes extérieures 26-27 et 28-29. L'assemblage de différents éléments constituant le transformateur est réalisé, par exemple, par collage. Grâce à ce type d'alimentation représentée à la figure 5 et au transformateur de la figure 6, on obtient les formes d'ondes représentées à la figure 7.

Le circuit d'alimentation illustré à la figure 5 permet d'obtenir une vitesse pratiquement stable pour un moteur piézo-électrique M selon l'invention. Cependant, de manière à pouvoir garantir cette vitesse stable tout en permettant un réglage selon différentes vitesses de rotation, l'invention prévoit d'adjoindre à l'alimentation plus particulièrement décrite à la figure 5 un dispositif de régulation de cette vitesse.

Pour agir sur ladite vitesse de rotation du rotor, trois modes de réglage peuvent être envisagés en agissant sur :

- l'amplitude des tensions d'alimentation ;
- l'écart entre la fréquence d'alimentation et la fréquence de résonance ;
- le déphasage relatif des deux voies d'alimentation.

Dans notre circuit d'alimentation, la fréquence et le déphasage relatif sont fixés : les éléments L et C sont calculés pour qu'à une fréquence donnée $f_0$, le déphasage relatif soit égal à 90°. Par conséquent, le seul mode de réglage utilisable est la variation des tensions d'alimentation.

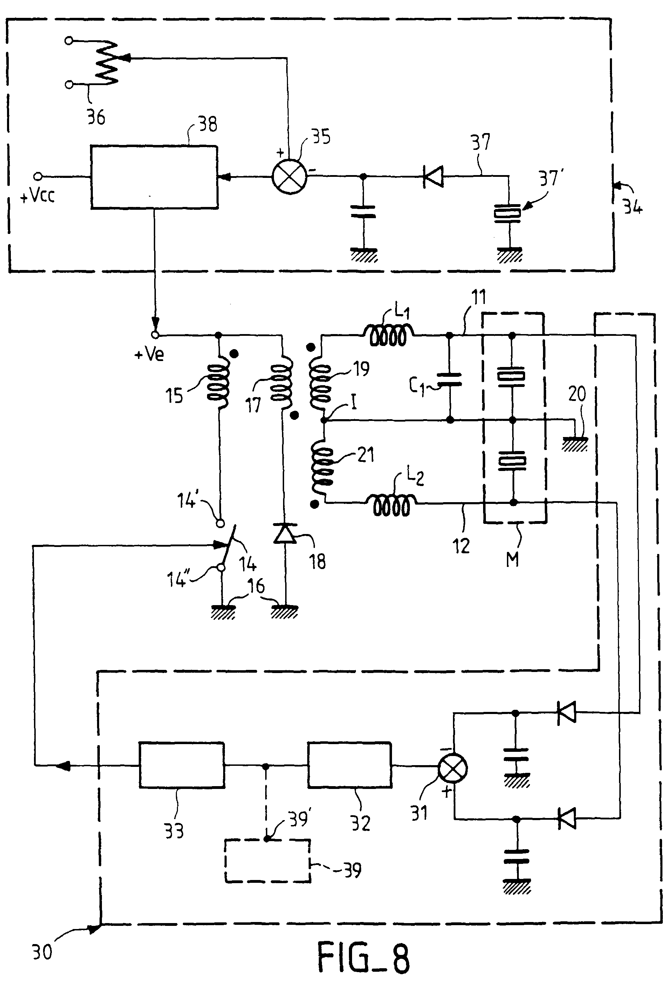

Pour cela, le circuit d'alimentation représenté à la figure 8 comporte un premier moyen de contrôle 30, dit première boucle de régulation, délivrant un signal de commande à l'interrupteur 14 de manière à équilibrer les amplitudes des tensions déphasées $V_1'$ et $V_2'$ et un deuxième moyen de contrôle 34, dit seconde boucle de régulation, assurant la régulation de la vitesse de rotation du moteur piézo-électrique M.

Ledit premier moyen de contrôle 30 comprend en série des premiers moyens de comparaisons 31 à deux entrées dont l'une est connectée à l'électrode 11 du moteur piézo-électrique M excitant l'élément piézo-électrique par la tension $V_1'$ et l'autre est connectée à l'autre électrode 12 du moteur piézo-électrique M excitant l'élément piézo-électrique par la tension $V_2'$, des premiers moyens de filtrage 32 d'un signal représentatif de la différence entre les deux tensions $V_1'$ et $V_2'$ et un convertisseur tension/fréquence 33 générant un signal de commande à l'entrée de l'interrupteur 14.

Selon un complément de mode de réalisation du circuit d'alimentation représenté à la figure 8 et illustré en traits mixtes sur cette même figure 8, le premier moyen de contrôle 30 comporte, en outre, un moyen de calcul 39 du couple moteur délivré dont l'entrée 39' est connectée entre les premiers moyens de filtrage et le convertisseur tension/fréquence 33.

Un tel premier moyen de contrôle 30 permet ainsi d'équilibrer les amplitudes des tensions déphasées en ajustant la fréquence de fonctionnement du système. Après la comparaison des amplitudes des tensions des deux phases du moteur, le signal d'erreur obtenu, après régulation et amplification, est appliqué à l'entrée du convertisseur tension/fréquence (VCO) qui génère le signal de commande de l'interrupteur T. Le système se stabilise ainsi à une fréquence telle que les amplitudes des tensions d'alimentation sont identiques. Cette fréquence correspond, à vide, à la fréquence $f_0$ choisie lors du dimensionnement des éléments L et C. Lors de l'application d'un couple de charge qui modifie légèrement les valeurs des paramètres R et C du circuit électrique équivalent aux phases du moteur, on constate un léger décalage vers la gauche des courbes de résonnance de la figure 4. Si la fréquence d'alimentation est maintenue à la valeur $f_0$ du fonctionnement à vide, ce léger décalage entraîne, compte tenu de l'acuité des résonances mises en jeu, un déséquilibre sensible des tensions appliquées : $|V_1'|$ diminue tandis que $|V_2'|$ augmente. La compensation de ce phénomène par le biais du premier moyen de contrôle 30 constitue ainsi un moyen particulièrement simple d'estimation du couple délivré dont une image est disponible à l'entrée du convertisseur tension/fréquence 33 moyennant la suppression de la composante continue correspondant à la fréquence $f_0$ du fonctionnement à vide. Le couple délivré est donc ainsi donné par le moyen de calcul 39.

Le deuxième moyen de contrôle 34 délivre un signal de régulation à la source de tension continue $V_E$ de manière à contrôler ladite source de tension continue $V_E$.

Ledit deuxième moyen de contrôle 34 comprend en série des seconds moyens de comparaison 35 à deux entrées dont l'une est connectée à l'entrée d'un dispositif de sélection d'une vitesse de consigne 36 correspondant à une vitesse désirée de fonctionnement du moteur et l'autre est connectée à une électrode 37 d'un capteur statorique 37' délivrant une image de la vitesse de rotation du moteur, ainsi que des seconds moyens 38 de filtrage d'un signal représentatif de la différence entre l'image de la vitesse de rotation du moteur M et la vitesse de consigne et de génération de la tension $V_E$ de la source continue.

Un tel deuxième moyen de contrôle 34 assure la régulation de la vitesse du moteur M. La comparaison de l'amplitude de la tension délivrée par l'électrode du capteur statorique, image de la vitesse de rotation, avec un niveau de consigne correspondant à la vitesse désirée, fournit un signal d'erreur qui, après régulation et amplification, est appliqué à l'entrée des seconds moyens de régulation 38 de la tension à niveau variable. Lesdits moyens 38 contrôlent la tension d'entrée continue du montage Ve donc agissent sur la vitesse du moteur. Si le capteur statorique n'existe pas, une solution pour régler la vitesse peut consister à jouer simplement sur l'amplitude des tensions d'alimentation en agissant sur la tension Ve.

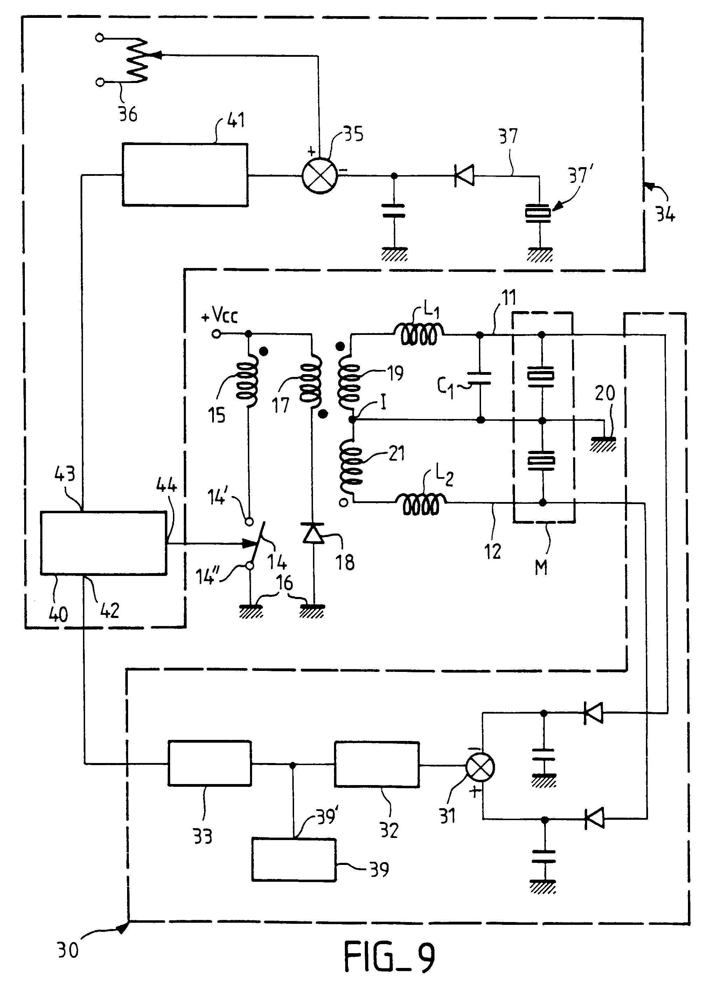

Selon un nouveau mode de réalisation du circuit d'alimentation plus avantageux que celui représenté à la figure 8 et illustré sur la figure 9, où les mêmes références désignent les mêmes éléments que ceux décrits sur la figure 8, le deuxième moyen de contrôle 34 comprend en série les seconds moyens de comparaison 35, des troisièmes moyens de filtrage 41 d'un signal représentatif de la différence entre l'image de la vitesse de rotation M et la vitesse de consigne ainsi qu'un modulateur de largeur d'impulsion à deux entrées 40 dont l'une 43 est connectée à la sortie des troisièmes moyens de filtrage 41 et l'autre 42 est connectée à la sortie du convertisseur tension/fréquence 33 du premier moyen de contrôle 30 et générant, à sa sortie 44, un signal de commande de largeur d'impulsion variable à l'entrée de l'interrupteur 14.

Dans cette dernière réalisation, pour effectuer un réglage de la tension appliquée sur les phases de la machine, on joue sur le rapport cyclique du signal de commande de l'interrupteur 14. Cette solution conduit certes à une dégradation des formes d'ondes d'alimentation lorsque le rapport cyclique s'écarte de sa valeur maximale égale à 1/2. Néanmoins, cette variante conduit à une simplification des circuits électroniques du deuxième moyen de contrôle 34 améliorant ainsi la faisabilité et le prix de revient dudit moyen 34.

## Revendications

1. Circuit d'alimentation d'un moteur piézoélectrique (M) comprenant un rotor (1) entraîné par frottement avec un stator excité par un élément piézoélectrique (3) relié à deux électrodes (11 et 12) alimentées respectivement par deux tensions $(V_{1'})$ et $(V_{2'})$ alternatives haute fréquence de même amplitude et déphasée d'environ 90°, **caractérisé en ce qu'**il comporte une source unique d'alimentation alternative haute fréquence (V), ainsi qu'un moyen d'adaptation (Q) connecté, d'une part, à la source d'alimentation alternative (V) et, d'autre part, aux deux électrodes (11 et 12) excitant l'élément piézoélectrique (3), destiné à générer les deux tensions $(V_{1'})$ et $(V_{2'})$ et comportant deux quadripôles reliés respectivement aux électrodes (11 et 12) et comprenant des éléments passifs tels que des inductances et capacités.

2. Circuit d'alimentation selon la revendication 1, **caractérisé en ce que** la source d'alimentation alternative haute fréquence (V) comprend un transformateur (13) dont l'étage primaire est, d'une part, connecté à une source de tension continue $(V_E)$ et, d'autre part, associé à un interrupteur électronique (14), et dont l'étage secondaire est connecté audit moyen d'adaptation (Q).

3. Circuit d'alimentation selon la revendication 2, **caractérisé en ce que** la source unique d'alimentation alternative est du type FORWARD.

4. Circuit d'alimentation selon la revendication 3, **caractérisé en ce que** l'étage primaire du transformateur (13) comprend un premier enroulement (15) dont la borne pointée est connectée à une source de tension continue $(+V_E)$ et la borne non pointée est connectée à un plot (14') de l'interrupteur (14) dont l'autre plot est connecté à une masse (16), ainsi qu'un deuxième enroulement (17) dont la borne non pointée est connectée à la source de tension continue $(+V_E)$ et la borne pointée est connectée à la cathode d'une diode (18) dont l'anode est connectée à la masse (16), et en ce que l'étage secondaire du transformateur (13) comprend un premier enroulement (19) dont la borne pointée est connectée à l'extrémité d'une première inductance $(L_1)$ dont l'autre extrémité est connectée, d'une part, à une extrémité d'un condensateur $(C_1)$ dont l'autre extrémité est connectée à une masse (20), et, d'autre part, à l'électrode (11) excitant l'élément piézoélectrique (3), ainsi qu'un deuxième enroulement (21) dont la borne non pointée est connectée à la borne non pointée du premier enroulement (19) de l'étage secondaire, et la borne pointée est connectée à l'extrémité d'une deuxième inductance $(L_2)$ dont l'autre extrémité est connectée à l'autre électrode (12) de l'élément piézoélectrique (3).

5. Circuit d'alimentation selon la revendication 4, **caractérisé en ce que** le moyen d'adaptation (Q) comprend, d'une part, la première inductance $(L_1)$ et le condensateur constituant avec l'élément piézoélectrique (3) un premier circuit résonnant et, d'autre part, la deuxième inductance ($L_2$) constituant, avec l'élément piézoélectrique (3) un deuxième circuit résonnant.

6. Circuit d'alimentation selon l'une quelconque des revendications 3 à 5,
   **caractérisé en ce que** la première inductance ($L_1$) et la deuxième inductance ($L_2$) sont constituées par les inductances de fuite du transformateur (13).

7. Circuit d'alimentation selon la revendication 6,
   **caractérisé en ce que** le transformateur (13) comportant un circuit magnétique se composant de deux demi-circuits en ferrite en forme de (E) et comprenant chacun une jambe centrale (24 ou 25) et deux jambes extérieures (26-27 ou 28-29), les enroulements de l'étage primaire sont enroulés autour des jambes centrales (24 et 25) et les enroulements de l'étage secondaire sont enroulés autour des jambes extérieures (26-27 et 28-29).

8. Circuit d'alimentation selon l'une quelconque des revendications 2 à 7,
   **caractérisé en ce qu'**il comporte un premier moyen de contrôle (30) délivrant un signal de commande de l'interrupteur (14) de manière à équilibrer les amplitudes des tensions ($V_1'$ et $V_2'$).

9. Circuit d'alimentation selon la revendication 8,
   **caractérisé en ce que** le premier moyen de contrôle (30) comprend en série des premiers moyens de comparaisons (31) à deux entrées dont l'une est connectée à une électrode (11) du moteur piézoélectrique (M) excitant l'élément piézoélectrique (3) par la tension ($V_1'$) et l'autre est connectée à l'autre électrode (12) du moteur piézoélectrique (M) excitant l'élément piézoélectrique (3) par la tension ($V_2'$), des premiers moyens de filtrage (32) d'un signal représentatif de la différence entre les deux tensions ($V_1'$ et $V_2'$) et un convertisseur tension/fréquence (33) générant un signal de commande à l'entrée de l'interrupteur (14).

10. Circuit d'alimentation selon la revendication 9,
    **caractérisé en ce que** le premier moyen de contrôle (30) comporte en outre un moyen de calcul (39) du couple moteur délivré dont l'entrée (39') est connectée entre les premiers moyens de filtrage (32) et le convertisseur tension/fréquence (33).

11. Circuit d'alimentation selon les revendications 8 à 10,
    **caractérisé en ce qu'**il comporte un deuxième moyen de contrôle (34) destiné à contrôler la vitesse de rotation du moteur (M).

12. Circuit d'alimentation selon la revendication 11,
    **caractérisé en ce que** le deuxième moyen de contrôle (34) comprend en série des seconds moyens de comparaison (35) à deux entrées dont l'une est connectée à l'entrée d'un dispositif de sélection d'une vitesse de consigne (36) correspondant à une vitesse désirée de fonctionnement du moteur et l'autre est connectée à une électrode (37) d'un capteur statorique (37') délivrant une image de la vitesse de rotation du moteur (M), ainsi que des seconds moyens (38) de filtrage d'un signal représentatif de la différence entre l'image de la vitesse de rotation du moteur (M) et la vitesse de consigne et de génération de la tension ($V_E$) de la source continue.

13. Circuit d'alimentation selon la revendication 12,
    **caractérisé en ce que** le deuxième moyen de contrôle (34) comprend en série des seconds moyens de comparaison (35), des troisièmes moyens de filtrage (41) d'un signal représentatif de la différence entre l'image de la vitesse de rotation du moteur (M) et la vitesse de consigne ainsi qu'un modulateur de largeur d'impulsion à deux entrées (40) dont l'une (43) est connectée à la sortie des troisièmes moyens de filtrage (41) et l'autre (42) est connectée à la sortie du convertisseur tension/fréquence (33) du premier moyen de contrôle (30) et générant, à sa sortie (44), un signal de commande de largeur d'impulsion variable à l'entrée de l'interrupteur (14).

## Patentansprüche

1. Versorgungsschaltung für einen piezoelektrischen Motor (M) mit einem Rotor (1), der durch Reibung von einem Stator angetrieben wird, der von einem piezoelektrischen Element (3) erregt wird, das mit zwei Elektroden (11, 12) verbunden ist, die durch zwei hochfrequente Wechselspannungen ($V_1'$) und ($V_2'$) versorgt werden, die die gleiche Amplitude aufweisen und um etwa 90° phasenverschoben sind,
   **dadurch gekennzeichnet, daß** sie eine einzige Quelle zur Versorgung mit einer hochfrequenten Wechselspannung (V) sowie ein Anpassungsmittel (Q) aufweist, das einerseits mit der Wechselspannungsversorgung (V) und andererseits mit den zwei Elektroden (11, 12) verbunden ist, die das piezoelektrische Element (3) erregen, und dazu bestimmt ist, die beiden Spannungen ($V_1'$) und ($V_2'$) zu erzeugen, und zwei Quadrupole aufweist, die mit den Elektroden (11, 12) verbunden sind und passive Elemente wie Induktivitäten und Kapazitäten aufweisen.

2. Versorgungsschaltung nach Anspruch 1,
   **dadurch gekennzeichnet, daß** die Hochfrequenzwechselspannungsversorgung (V) einen Transformator (13) aufweist, dessen Primärstufe einerseits mit einer Gleichspannungsquelle ($V_E$) verbunden ist und andererseits einem elektronischen Schalter (14) zugeordnet ist, und dessen Sekundärstufe mit dem Anpassungsmittel (Q) verbunden ist.

3. Versorgungsschaltung nach Anspruch 2, **dadurch gekennzeichnet, daß** die einzige Wechselspannungsversorgungsquelle vom Typ FORWARD ist.

4. Versorgungsschaltung nach Anspruch 3, **dadurch gekennzeichnet, daß** die Primärstufe des Transformators (13) eine erste Wicklung (15), deren zugespitzter Anschluß mit der Gleichspannungsquelle (+$V_E$) verbunden ist und deren nichtzugespitzter Anschluß mit einem Kontakt (14') des Schalters (14) verbunden ist, dessen anderer Kontakt mit einer Masse (16) verbunden ist, sowie eine zweite Wicklung (17) aufweist, deren nichtzugespitzter Anschluß mit der Gleichspannungsquelle (+$V_E$) verbunden ist und deren zugespitzter Anschluß mit der Kathode einer Diode (18) verbunden ist, deren Anode mit der Masse (16) verbunden ist, und daß die Sekundärstufe des Transformators (13) eine erste Wicklung (19), deren zugespitzter Anschluß mit dem Ende einer ersten Induktivität ($L_1$)verbunden ist, deren anderes Ende einerseits mit einem Ende eines Kondensators ($C_1$) verbunden ist, dessen anderes Ende mit einer Masse (20) verbunden ist, und andererseits mit der Elektrode (11), die das piezoelektrische Element (3) erregt, sowie eine zweite Wicklung (21) aufweist, deren nichtzugespitzer Anschluß mit dem nichtzugespitzten Anschluß der ersten Wicklung (19) der Sekundärstufe verbunden ist, und der zugespitzte Anschluß mit dem Ende einer zweiten Induktivität ($L_2$) verbunden ist, deren anderes Ende mit der anderen Elektrode (12) des piezoelektrischen Elements (3) verbunden ist.

5. Versorgungsschaltung nach Anspruch 4, **dadurch gekennzeichnet, daß** das Anpassungsmittel (Q) einerseits die erste Induktivität ($L_1$) und den Kondensator, die mit dem piezoelektrischen Element (3) einen ersten Resonanzkreis bilden, und andererseits die zweite Induktivität ($L_2$) aufweist, die mit dem piezoelektrischen Element (3) einen zweiten Resonanzkreis bildet.

6. Versorgungsschaltung nach einem der Ansprüche 3 bis 5, **dadurch gekennzeichnet, daß** die erste Induktivität ($L_1$) und die zweite Induktivität ($L_2$) durch die Streuinduktivitäten des Transformators (13) gebildet sind.

7. Versorgungsschaltung nach Anspruch 6, **dadurch gekennzeichnet, daß** der Transformator (13) einen Magnetkreis aufweist, der aus zwei Ferritkreishälften in Form eines (E) besteht, die jeweils einen zentralen Schenkel (24 oder 25) sowie zwei äußere Schenkel (26-27 oder 28-29) aufweisen, die Wicklungen der Primärstufe um die zentralen Schenkel (24, 25) gewickelt sind und die Wicklungen der Sekundärstufe um die äußeren Schenkel (26-27 und 28-29) gewickelt sind.

8. Versorgungsschaltung nach einem der Ansprüche 2 bis 7, **dadurch gekennzeichnet, daß** sie ein erstes Kontrollmittel (30) aufweist, das ein Steuersignal für den Schalter (14) abgibt, so daß die Amplituden der Spannungen ($V_1$' und $V_2$') ausgeglichen werden.

9. Versorgungsschaltung nach Anspruch 8, **dadurch gekennzeichnet, daß** das erste Kontrollmittel (30) in Reihe erste Vergleichsmittel (31) mit zwei Eingängen, von denen der eine mit einer Elektrode (11) des piezoelektrischen Motors (M) verbunden ist, die das piezoelektrische Element (3) durch die Spannung ($V_1$') erregt, und der andere mit der anderen Elektrode (12) des piezoelektrischen Motors (M) verbunden ist, die das piezoelektrische Element (3) durch die Spannung ($V_2$') erregt, erste Filtermittel 32 für ein Signal, das für die Differenz zwischen den beiden Spannungen ($V_1$' und $V_2$') steht, sowie einen Spannungs-Frequenz-Umsetzer (33) aufweist, der ein Steuersignal am Eingang des Schalters (14) erzeugt.

10. Versorgungsschaltung nach Anspruch 9, **dadurch gekennzeichnet, daß** das erste Kontrollmittel (30) ferner ein Rechenmittel (39) für das abgegebene Motormoment aufweist, dessen Eingang (39') zwischen die ersten Filtermittel (32) und den Spannungs-Frequenz-Umsetzer (33) geschaltet ist.

11. Versorgungsschaltung nach den Ansprüchen 8 bis 10, **dadurch gekennzeichnet, daß** sie ein zweites Kontrollmittel (34) aufweist, das zur Kontrolle der Drehzahl des Motors (M) bestimmt ist.

12. Versorgungsschaltung nach Anspruch 11, **dadurch gekennzeichnet, daß** das zweite Kontrollmittel (34) in Reihe zweite Vergleichsmittel (35) mit zwei Eingängen, von denen der eine mit dem Eingang einer Einrichtung (36) zur Auswahl einer Einstellgeschwindigkeit verbunden ist, die einer gewünschten Betriebsdrehzahl des Motors entspricht, und der andere mit einer Elektrode (37) eines Statorsensors (37') verbunden ist, der ein Bild der Drehzahl des Motors (M) abgibt, sowie zweite Filtermittel (38) für ein Signal aufweist, das für die Differenz zwischen dem Bild der Drehzahl des Motors (M) und der Geschwindigkeit der Einstellung und der Erzeugung der Spannung (V$_E$) der Gleichspannungsquelle steht.

13. Versorgungsschaltung nach Anspruch 12, **dadurch gekennzeichnet, daß** das zweite Kontrollmittel (34) in Reihe zweite Vergleichsmittel (35), dritte Filtermittel (41) für ein Signal, das für die Differenz zwischen dem Bild der Drehzahl des Motors (M) und der Einstelldrehzahl steht, sowie einen Pulsweitenmodulator (40) mit zwei Eingängen aufweist, von denen der eine (43) mit dem Ausgang der dritten Filtermittel (41) und der andere (42) mit dem Ausgang des Spannungs-Frequenz-Umsetzers (33) des ersten Kontrollmittels (30) verbunden ist und an seinem Ausgang (44) ein variables Signal zum Steuern der Pulsweite am Eingang des Schalters (14) erzeugt.

**Claims**

1. A supply circuit of a piezoelectric motor (M) comprising a rotor (1) entrained by friction with a stator excited by a piezoelectric element (3) connected to two electrodes (11 and 12) supplied respectively with two high frequency alternating voltages (V$_1$' and V$_2$') having the same amplitude and out of phase by about 90°, characterised in that it comprises a single high frequency alternating supply source (V) and also adaptation means (Q) connected, on the one hand, to the alternating supply source (V) and, on the other hand, to the two electrodes (11 and 12) exciting the piezoelectric element (3), designed to produce the two voltages (V$_1$' and V$_2$') and comprising two quadripoles connected respectively to the electrodes (11 and 12) and comprising passive elements such as inductances and capacitors.

2. A supply circuit according to claim 1, characterised in that the high frequency alternating supply source (V) comprises a transformer (13) the primary stage of which is, on the one hand, connected to a source of DC voltage (V$_E$) and, on the other hand, connected to an electronic switch (14), and the secondary stage of which is connected to said adaptation means (Q).

3. A supply circuit according to claim 2, characterised in that the single alternating supply source is of the FORWARD type.

4. A supply circuit according to claim 3, characterised in that the primary stage of the transformer (13) comprises a first winding (15) the marked (with a dot) terminal of which is connected to a source of DC voltage (+V$_E$) and the unmarked terminal of which is connected to a contact (14') of the switch (14) the other contact of which is connected to an earthing point (16), and a second winding (17) the unmarked terminal of which is connected to the source of DC voltage (+V$_E$) and the marked terminal of which is connected to the cathode of a diode (18) the anode of which is connected to the earthing point (16), and in that the secondary stage of the transformer (13) comprises a primary winding (19) the marked terminal of which is connected to the end of a first inductance (L$_1$), the other end of which is connected, on the one hand, to one end of a capacitor (C$_1$) the other end of which is connected to an earthing point (20) and, on the other hand, to the electrode (11) exciting the piezoelectric element (3), and also a second winding (21) the unmarked terminal of which is connected to the unmarked terminal of the first winding (19) of the secondary stage and the marked terminal of which is connected to the end of a second inductance (L$_2$) the other end of which is connected to the other electrode (12) of the piezoelectric element (3).

5. A supply circuit according to claim 4, characterised in that the adaptation means (Q) comprise, on the one hand, the first inductance (L$_1$) and the capacitor forming with the piezoelectric element (3) a first resonant circuit and, on the other hand, the second inductance (L$_2$) forming with the piezoelectric element (3) a second resonant circuit.

6. A supply circuit according to any one of claims 3 to 5, characterised in that the first inductance (L$_1$) and the second inductance (L$_2$) consist of leakage inductances of the transformer (13).

7. A supply circuit according to claim 6, characterised in that the transformer (13) comprising a magnetic circuit composed of two half-circuits made of ferrite in the shape of an E, each comprising a central leg (24 or 25) and two outer legs (26-27 or 28-29), the windings of the primary stage are wound around the central legs (24 and 25) and the windings of the secondary stage are wound around the outer legs (26-27 and 28-29).

8. A supply circuit according to any one of claims 2 to 7, characterised in that it comprises a first control means (30) supplying a control signal of the switch (14) so as to balance the amplitudes of the voltages (V$_1$' and V$_2$').

9. A supply circuit according to claim 8, characterised in that the first control means (30) comprises, in series, first comparison means (31) having two inputs, one of which is connected to one electrode (11) of the piezoelectric motor (M) exciting the piezoelectric element (3) with the voltage ($V_1$')
and the other of which is connected to the other
electrode (12) of the piezoelectric motor (M) exciting the piezoelectric element (3) with the voltage
($V_2$'), first means (32) for filtering a signal representing the difference between the two voltages ($V_1$' and
$V_2$') and a voltage/frequency converter (33) generating a control signal at the input of the switch (14).

10. A supply circuit according to claim 9,
characterised in that the first control means (30) also comprises a means (39) for calculating the motor
torque supplied, the input (39') of which is connected between the first filtering means (32) and the
voltage/frequency converter (33).

11. A supply circuit according to claims 8 to 10,
characterised in that it comprises a second control
means (34) designed to control the rotation speed
of the motor (M).

12. A supply circuit according to claim 11,
characterised in that the second control means (34)
comprises, in series, second comparison means
(35) having two inputs, one of which is connected
to the input of a device for selecting a reference
speed (36) corresponding to a desired operating
speed of the motor and the other of which is connected to an electrode (37) of a stator sensor (37')
supplying an image of the rotation speed of the motor (M), and also second means (38) for filtering a
signal representing the difference between the image of the rotation speed of the motor (M) and the
reference speed producing the DC voltage ($V_E$).

13. A supply circuit according to claim 12,
characterised in that the second control means (34)
comprises, in series, second comparison means
(35), third means (41) for filtering a signal representing the difference between the image of the rotation
speed of the motor (M) and the reference speed,
and also a pulse width modulator (40) having two
inputs, one of which (43) is connected to the output
of the third filtering means (41) and the other (42)
of which is connected to the output of the voltage/
frequency converter (33) of the first control means
(30), and producing at its output (44) a signal for
controlling a variable pulse width at the input of the
switch (14).

ART ANTERIEUR

# FIG_1

V1'

V2'

ART ANTERIEUR

# FIG_2

## FIG_3

## FIG_4

FIG_5

FIG_6

12

# FIG_7

FIG_8

FIG_9